# EUROPÄISCHE PATENTSCHRIFT

(11) **EP 3 822 609 B1**
(45) Veröffentlichungstag und Bekanntmachung des Hinweises auf die Patenterteilung: **29.06.2022**
(21) Anmeldenummer: 20206751.8
(22) Anmeldetag: 10.11.2020
(51) Int. Cl.: G01M 99/00, G01M 15/04, G01M 15/09, G01N 25/48

(54) **VORRICHTUNG UND VERFAHREN ZUR KONDITIONIERUNG EINES BETRIEBSFLUIDS**
DEVICE AND METHOD FOR CONDITIONING OF A FLUID
DISPOSITIF ET PROCÉDÉ DE CONDITIONNEMENT D'UN FLUIDE DE FONCTIONNEMENT

(30) Priorität: 12.11.2019 AT 509632019
(43) Veröffentlichungstag der Anmeldung: 19.05.2021
(73) Patentinhaber: AVL List GmbH, 8020 Graz (AT)
(72) Erfinder: Lechner, Gerald, 8010 Graz (AT); Pressler, Michael, 8055 Graz (AT); Baumgartner, Andreas, 8321 St. Margarethen a.d. Raab (AT); Burazer, Vedran, 8045 Graz (AT); Rath, Wolfgang, 7551 Bocksdorf (AT)
(74) Vertreter: Patentanwälte Pinter & Weiss OG

(56) Entgegenhaltungen:
- CN-A- 104 483 134
- US-A- 5 054 314
- US-A1- 2002 091 471

## Beschreibung

Die gegenständliche Offenbarung betrifft eine Vorrichtung zur Konditionierung eines Betriebsfluids an einem Prüfstand, wobei die Vorrichtung eine Betriebsleitungsanordnung für das Betriebsfluid aufweist, welche in einer Einspeisung zu einem Testobjekt einmündet, wobei das in die Einspeisung eingespeiste Betriebsfluid auf eine Einleittemperatur innerhalb eines Betriebstemperaturbereichs regelbar ist, wobei die Vorrichtung eine Konditionierleitungsanordnung aufweist, über welche zumindest ein Wärmeträgerfluid zu zumindest einem Wärmetauscher geleitet wird und wobei der zumindest eine Wärmetauscher für einen Wärmeaustausch zwischen der Konditionierleitungsanordnung und der Betriebsleitungsanordnung angeordnet ist, wobei die Konditionierleitungsanordnung zumindest einen ersten Wärmeträgereinlass zur Zuleitung eines ersten Wärmeträgerfluidstroms mit einer ersten Wärmeträgertemperatur aufweist.

Weiters betrifft die gegenständliche Offenbarung ein Verfahren zur Konditionierung eines Betriebsfluids an einem Prüfstand, wobei das Betriebsfluid mit einer innerhalb eines Betriebstemperaturbereichs geregelten Einleittemperatur einem Testobjekt zugeführt wird und wobei das Betriebsfluid vor dem Zuführen über zumindest einen Wärmetauscher geleitet wird, in dem ein Wärmeaustauch mit einem Wärmeträgerfluid erfolgt, wobei zur Konditionierung zumindest ein erster Wärmeträgerfluidstrom mit einer ersten Wärmeträgertemperatur verwendet wird.

Vorrichtungen und Verfahren dieser Art werden an Prüfständen verwendet, um Fluidmedien unterschiedlicher Art, beispielsweise Kühlluft, Kühlflüssigkeit, Treibstoff oder ähnliche Fluida, auf bestimmte Vorgabetemperaturen zu konditionieren. Gegebenenfalls kann auch eine Einstellung anderer Parameter, wie etwa des Druckzustands, der Fließrate, der Feuchtigkeit, etc. erfolgen. Die eingestellten Parameter werden dabei über definierte Zeitspannen auf einen eingestellten Wert konstant gehalten. Für einen Wechsel zu einem anderen Vorgabewert werden üblicherweise Übergangszeiten definiert, innerhalb derer der neue Vorgabewert erreicht sein soll. Eine Regelung der Trajektorie (d.h. etwa des Temperaturverlaufs) im Übergangsbereich zwischen zwei Vorgabewerten ist mit derzeit verwendeten Vorrichtungen und Verfahren aufgrund der komplexen Zusammenhänge nicht möglich. Insbesondere die Zeitverzögerungen der Regelung und die hohen Reaktionszeiten, die den erheblichen thermischen Massen geschuldet sind, verhindern dies.

US 2012125564 A1 offenbart eine Vorrichtung zur Temperaturregelung eines Kühlmittels für einen Motorprüfstand, wobei das Kühlmittel über einen Wärmetauscher geführt und mittels eines externen Kühlkreislaufs gekühlt wird.

Weitere gattungsgemäße Konditioniereinrichtungen sind beispielsweise in CN 104 483 134 A, US 2002/091471 A1 und US 5,054,314 A offenbart. Dabei zeigt CN 104 483 134 A eine Kühleinrichtung für einen Motorenprüfstand, US 2002/091471 A1 zeigt ein Testsystem für ein Kraftfahrzeugbauteil, z.B. einen Verbrennungsmotor, und US 5,054,314 A zeigt einen mechanischen Ermüdungsprüfstand für Zylinderköpfe von Motoren.

Es besteht ein Bedarf an innovativen Ansätzen und Lösungen, mit denen sich die Regelgeschwindigkeit, das Ansprechverhalten und die Regelgenauigkeit von Konditionieranlagen verbessern lassen.

In einem ersten Aspekt betrifft die gegenständliche Offenbarung eine Vorrichtung der eingangs genannten Art, bei der die Konditionierleitungsanordnung zumindest einen zweiten Wärmeträgereinlass zur Zuleitung eines zweiten Wärmeträgerfluidstroms mit einer zweiten Wärmeträgertemperatur aufweist, wobei die erste Wärmeträgertemperatur auf einen Wert unterhalb des Betriebstemperaturbereichs einstellbar ist, wobei die zweite Wärmeträgertemperatur auf einen Wert oberhalb des Betriebstemperaturbereichs einstellbar ist und wobei die Vorrichtung eine Einstellventilanordnung aufweist, mit welcher durch geregeltes Mischen von zumindest zwei Fluida unterschiedlicher Temperatur die Einleittemperatur des Betriebsfluids innerhalb des Betriebstemperaturbereichs dynamisch regelbar ist. Dies erlaubt eine dynamische Verfolgung veränderlichen Vorgabewerten der Einleittemperatur des Betriebsfluids wodurch sich komplexe Testvorgaben exakt und wiederholbar reproduzieren lassen.

In vorteilhafter Weise kann die Einstellventilanordnung druckluftbetätigte Ventile und/oder andere hochdynamisch betätigbare Ventile aufweisen, wodurch hochdynamische Stellbewegungen der Ventile erzielbar sind. Unabhängig von der Art der verwendeten Ventile ist sicherzustellen, dass sich mit dem jeweiligen Betätigungsmechanismus eine ausreichend hohe Präzision und Geschwindigkeit der Ventilsteuerung erzielen lässt. Neben druckluftbetätigten Ventilen kommen dazu insbesondere hochdynamische elektrisch (etwa mit Servomotoren) angetriebene Ventile in Frage.

In einer vorteilhaften Ausführungsform kann die Konditionierleitungsanordnung eine Verbindung zwischen den Leitungsbereichen für den ersten Wärmeträgerfluidstrom und den zweiten Wärmeträgerfluidstrom aufweisen. Dies setzt voraus, dass als Wärmeträgerfluid für den ersten Wärmeträgerfluidstrom und den zweiten Wärmeträgerfluidstrom dasselbe Wärmeträgerfluid verwendet wird. Dadurch lässt sich der Aufwand für die Konditionierleitungsanordnung und die erforderlichen Einrichtungen für die Bereitstellung des Wärmeträgerfluids erheblich verringern (zum Beispiel können Vorrichtungen realisiert werden, die mit einem einzigen Wärmetauscher das Auslangen finden). Je nach erforderlichem Betriebstemperaturbereich können als Wärmeträgerfluid beispielsweise Wasse, Öle, im Wesentlichen gesättigte Salzlösungen oder vergleichbare Fluida, verwendet werden, denen gegebenenfalls Zusätze zugemischt sein können. Beispielsweise kann ein Wasser-Glykol-Gemisch als Wärmeträgerfluid verwendet werden.

In vorteilhafter Weise kann die Einstellventilanordnung in der Konditionierleitungsanordnung angeordnet sein. Dabei werden beispielsweise der erste Wärmeträgerfluidstrom und der zweite Wärmeträgerfluidstrom (und gegebenenfalls weitere Wärmeträgerfluidströme) in geregelter Weise vermischt und in den Wärmetauscher geleitet. Der Wärmestrom zwischen dem (gemischten) Wärmeträgerfluid und dem Betriebsfluid im Wärmetauscher kann dabei auf eine gewünschte Temperatur bzw. einen gewünschten Temperaturverlauf der Einleittemperatur des Betriebsfluids geregelt werden. Dies setzt eine Mischbarkeit der unterschiedlichen Wärmeträgerfluida voraus, wobei die Verwendung identischer Wärmeträgerfluida bevorzugt ist.

In einer weiteren vorteilhaften Ausgestaltung kann die Konditionierleitungsanordnung voneinander getrennten Leitungsbereiche für den ersten Wärmeträgerfluidstrom und den zweiten Wärmeträgerfluidstrom aufweisen. Dadurch können unterschiedliche Wärmeträgerfluida verwendet werden, die jeweils hinsichtlich ihrer Wärmeträgertemperatur optimiert sind und es lässt sich die Wärmeübertragung verbessern. Gegebenenfalls lassen sich dadurch auch größere Betriebstemperaturbereiche erzielen.

In vorteilhafter Weise kann der erste Wärmeträgerfluidstrom zu einem ersten Wärmetauscher geführt sein und der zweite Wärmeträgerfluidstrom kann zu einem zweiten Wärmetauscher geführt sein, wobei die Einstellventilanordnung in der Betriebsleitungsanordnung angeordnet ist. Dabei wird die Strömung des Betriebsfluids in geregelter Weise auf die beiden Wärmetauscher (wärmen/kühlen) aufgeteilt. Nach den Wärmetauschern werden die beiden Strömungen vereint, wobei sich die Einleittemperatur ergibt. Dies erlaubt kurze Leitungswege für die Betriebsleitungsanordnung sodass sich eine geringe thermische Trägheit und eine hohe Regelgeschwindigkeit erzielen lässt.

In einer weiteren vorteilhaften Ausgestaltung kann die Einstellventilanordnung zur Mischung eines von dem ersten Wärmetauscher konditionierten ersten Betriebsfluidstroms mit einem von dem zweiten Wärmetauscher konditionierten zweiten Betriebsfluidstroms angeordnet sein. Die Einstellventilanordnung ist dabei nach den Wärmetauschern angeordnet. Dies erlaubt eine Aufwandsminimierung, da beispielsweise ein einziges dreiwege-Ventil für die Einstellung des Mischungsverhältnisses ausreicht. Weiters kann die Temperatureinstellung (über das Mischverhältnis) unmittelbar von der Einspeisung zum Testobjekt erfolgen, wodurch Regelverzögerungen minimiert werden können.

Gegebenenfalls kann die Einstellventilanordnung zur Aufteilung eines vorzugsweise von dem Testobjekt rückgeführten Betriebsfluidstroms in einen ersten Betriebsfluidstrom zu dem ersten Wärmetauscher und einen zweiten Betriebsfluidstrom zu dem zweiten Wärmetauscher angeordnet sein. Die Aufteilung des Betriebfluidstroms auf die beiden Wärmetauscher erfolgt dabei bereits stromaufwärts der Wärmetauscher.

In vorteilhafter Weise kann an oder nach einer Zusammenführung des ersten Betriebsfluidstroms und des zweiten Betriebsfluidstroms ein Turbolator angeordnet sein, um die Homogenität der Temperaturverteilung im Betriebsfuid zu verbessern. Der Turbolator verbessert auch die Messdynamik und Präzision einer nachgelagerten Temperaturmessung.

In einer weiteren vorteilhaften Ausgestaltung kann die Vorrichtung für einen positiven und/oder negativen maximalen Temperaturgradienten der Einleittemperatur von über 4 K/s, vorzugsweise über 6 K/s und insbesondere über 8 K/s ausgelegt sein. Dies erlaubt eine hochdynamische Veränderung und Regelung der Einleittemperatur.

Die gegenständliche Offenbarung betrifft in einem weiteren Aspekt ein Verfahren der eingangs genannten Art, wobei zur Konditionierung zumindest ein zweiter Wärmeträgerfluidstrom mit einer zweiten Wärmeträgertemperatur verwendet wird, wobei die erste Wärmeträgertemperatur auf einen Wert unterhalb des Betriebstemperaturbereichs eingestellt wird, wobei die zweite Wärmeträgertemperatur auf einen Wert oberhalb des Betriebstemperaturbereichs eingestellt wird und wobei die Einleittemperatur des Betriebsfluids durch geregeltes Mischen von zumindest zwei Fluida unterschiedlicher Temperatur innerhalb des Betriebstemperaturbereichs dynamisch geregelt wird. Dadurch lassen sich komplexe Testabläufe für Testobjekte in sehr realistischer Weise realisieren. Dies erleichtert beispielsweise Fahrzyklustest, etwa gemäß den Richtlinien NEDC oder WLTC. Verschiedene Testabläufe, die bislang nur als Straßentests mit teuren Prototypen durchgeführt werden konnten, können auf den Prüfstand verlagert werden. Dadurch wird es auch möglich, Komponenten einzeln zu testen.

In vorteilhafter Weise können der erste Wärmeträgerfluidstrom und der zweite Wärmeträgerfluidstrom zur Einstellung der Einleittemperatur in einem geregelten Verhältnis gemischt und der gemischte Wärmeträgerfluidstrom einem Wärmetauscher für einen Wärmeaustausch mit einem Betriebsfluidstrom zugeleitet werden. Die klare Trennung von Wärmeträgerfluid und Betriebsfluid erlaubt eine schnelle und einfache Anpassung des Teststands an unterschiedliche Testobjekte. Insbesondere können auch realitätsnahe Volumina und Druckverluste abgebildet werden.

In einer vorteilhaften Ausführungsform kann der erste Wärmeträgerfluidstrom einem ersten Wärmetauscher für einen Wärmeaustausch mit einem ersten Betriebsfluidstrom zugeleitet werden und der zweite Wärmeträgerfluidstrom kann einem zweiten Wärmetauscher für einen Wärmeaustausch mit einem zweiten Betriebsfluidstrom zugeleitet werden, wobei der erste Betriebsfluidstrom und der zweite Betriebsfluidstrom zur Einstellung der Einleittemperatur in einem geregelten Verhältnis miteinander gemischt werden. Dadurch lassen sich Regelungen mit einer sehr geringen Verzögerung realisieren.

In vorteilhafter Weise kann zur Regelung der Einleittemperatur eine vorausschauende Regelung verwendet werden. Vorausschauende Regelungen sind beispielsweise aus der Druckschrift AT 15462 U1 an sich bekannt. In Verbindung mit den hierin offenbarten Lehren können die Effekte solcher Regelverfahren erheblich verbessert werden.

In einer weiteren vorteilhaften Ausführungsform kann das Betriebsfluid innerhalb eines Betriebstemperaturbereichs geregelt werden, der eine Minimaltemperatur im Bereich von etwa -40 C° bis etwa 0 °C und eine Maximaltemperatur im Bereich von etwa 80 C° bis 140 C° etwa aufweist, wobei der Betriebstemperaturbereich vorzugsweise zwischen etwa -25 C° und etwa +125 C°liegt. In diesem Parameterbereich lassen sich zahlreiche Testverfahren durchführen. Je nach Anwendungsfall können die hierein beschriebenen Vorrichtungen und Verfahren jedoch auch auf unterschiedliche Betriebstemperaturbereiche eingestellt bzw. für solche ausgelegt werden.

In vorteilhafter Weise kann die erste Wärmeträgertemperatur zwischen -50 °C und -10 °C liegen und insbesondere etwa -30 °C betragen, und/oder die zweite Wärmeträgertemperatur kann zwischen 100 °C und 180°C liegen und insbesondere etwa 150 °C betragen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein Schaltbild einer Vorrichtung gemäß der gegenständlichen Offenbarung,
Fig. 2 ein Schaltbild einer Vorrichtung gemäß einer weiteren Ausführungsform mit zwei Wärmetauschern,
Fig. 3 ein Schaltbild einer Vorrichtung gemäß einer weiteren Ausführungsform,
Fig. 4 ein Schaltbild einer Vorrichtung gemäß der gegenständlichen Offenbarung in einer weiteren Ausführungsvariante,
Fig. 5 ein weiteres Schaltbild einer Vorrichtung gemäß einer weiteren Ausführungsform und
Fig. 6 ein weiteres Schaltbild einer Vorrichtung gemäß einer weiteren Ausführungsform mit einem einzelnen Wärmetauscher.

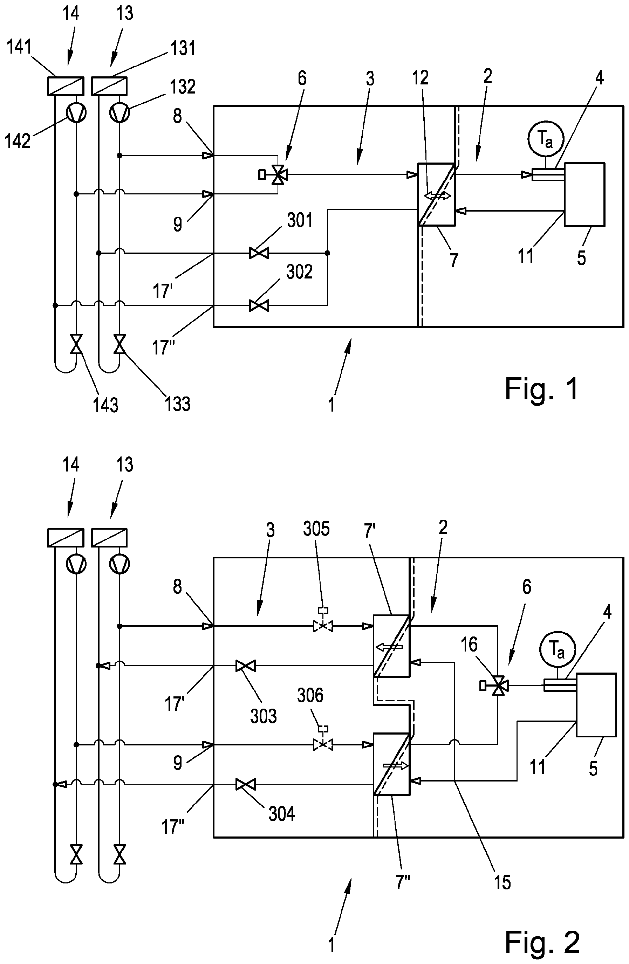

Fig. 1 zeigt eine schematisierte Darstellung eines Prüfstands 1, an dem ein Testobjekt 5 einem Test unterzogen wird. Vom Prüfstand 1 sind lediglich ausgewählte Elemente dargestellt, die im Zusammenhang mit der gegenständlichen Offenbarung relevant sind, wobei die dargestellten Elemente insbesondere die Vorrichtung zur Konditionierung eines Betriebsfluids betreffen, das dem Testobjekt 5 mit einer bestimmten Temperatur (und gegebenenfalls unter einem bestimmten Druck) über eine Einspeisung 4 zugeleitet wird.

Der Prüfstand 1 kann beispielsweise ein Fahrzeugprüfstand oder Motorprüfstand sein. Demgemäß kann das Testobjekt insbesondere ein Fahrzeug oder eine Wärmekraftmaschine, insbesondere eine Brennkraftmaschine, eine elektrische Maschine oder ein Hybridantriebsystem sein. Das zu konditionierende Betriebsfluid kann insbesondere ein dem Motor oder dem Fahrzeug zugeführtes Fluid sein, beispielweise konditionierte Außenluft, Motorkühlluft, Motorkühlflüssigkeit oder ein flüssiger oder gasförmiger Kraftstoff. Gegebenenfalls kann das Testobjekt auch ein in einer Testzelle angeordnetes Testobjekt sein, wobei die Umgebungsluft in der Testzelle mit der Vorrichtung konditioniert wird.

Als "Betriebsfluide" werden im Zusammenhang mit der gegenständlichen Offenbarung alle fließfähigen, insbesondere flüssige oder gasförmige Stoffe und Stoffgemische bezeichnet, die das Testobjekt im Betrieb beeinflussen und/oder die das Testobjekt für den Betrieb benötigt.

Die Einheit an Leitungen, die das Betriebsfluid enthalten, sowie die entsprechenden Tanks, Ventile, Messeinheiten, etc. wird im Zusammenhang mit der gegenständlichen Offenbarung als Betriebsleitungsanordnung 2 bezeichnet. Üblicherweise gelangt das Betriebsfluid von einem Tank oder von einem Rückfluss des Testobjekts 5 in die Betriebsleitungsanordnung 2, wird in dieser Betriebsleitungsanordnung 2 auf die gewünschte (und gegebenenfalls veränderliche) Temperatur und gegebenenfalls auf einen bestimmten Druck gebracht, und dann über eine Einspeisung 4 dem Testobjekt 5 bereitgestellt. Die Temperatur, die das Betriebsfluid bei der Einspeisung 4 hat, wird im Zusammenhang mit der gegenständlichen Offenbarung als Einleittemperatur Tₐ bezeichnet und es handelt sich dabei im Sinne der Regelung um die relevante Regelgröße.

In Fig. 1 umfasst die Betriebsleitungsanordnung 2 einen einfachen Kreislauf, der von einem Betriebsmittelauslass 11 des Testobjekts über einen Wärmetauscher 7 zur Einspeisung 4 führt.

An der anderen Seite des Wärmetauschers 7 ist, fluidisch getrennt von der Betriebsleitungsanordnung 2, eine Konditionierleitungsanordnung 3 vorgesehen, in der ein Wärmeträgerfluid (oder gegebenenfalls mehrere Wärmeträgerfluida) fließen. Die Systemgrenze zwischen der Betriebsleitungsanordnung 2 und der Konditionierleitungsanordnung 3 ist als Strichlinie schematisch angedeutet. Im Wärmetauscher kommt es in Abhängigkeit der Temperaturdifferenz zu einer Wärmestrom 12 zwischen dem Wärmeträgerfluid und dem Betriebsfluid, wobei der Wärmestrom 12 im in Fig. 1 dargestellten Fall in die eine oder die andere Richtung verlaufen kann. (D.h. von dem Betriebsfluid zu dem Wärmeträgerfluid - kühlen - oder von dem Wärmeträgerfluid zu dem Betriebsfluid - heizen).

Die Konditionierleitungsanordnung 3 weist einen ersten Wärmeträgereinlass 8 und einen zweiten Wärmeträgereinlass 9 auf. Während des Betriebs wird über den ersten Wärmeträgereinlass 8 ein erster Wärmeträgerfluidstrom mit einer ersten (kälteren) Wärmeträgertemperatur Tₗ zugeleitet, wobei die erste Wärmeträgertemperatur unterhalb eines Betriebstemperaturbereichs liegt, innerhalb dessen die Einleittemperatur Tₐ regelbar sein soll. Über den zweiten Wärmeträgereinlass 9 wird ein zweiter Wärmeträgerfluidstrom mit einer zweiten (wärmeren) Wärmeträgertemperatur Tₕ zugeleitet, wobei die zweite Wärmeträgertemperatur oberhalb des Betriebstemperaturbereichs liegt. Der Betriebstemperaturbereich kann dabei entweder für eine Anlage fix vorgegeben sein, oder er kann in bestimmten Bereichen einstellbar sein. Gegebenenfalls kann der Betriebstemperaturbereich auch während eines Testlaufs in Abhängigkeit von Testparametern veränderbar sein.

Der erste Wärmeträgerfluidstrom kann beispielsweise von einem Kühlmittelkreislauf 13 abgezweigt werden, in dem das Wärmeträgerfluid in einem Kreislauf auf der definierten ersten (niedrigen) Wärmeträgertemperatur gehalten wird. Der Kühlmittelkreislauf 13 umfasst in an sich bekannter Weise eine Wärmesenke 131, eine Kreislaufpumpe 132 und ein gegebenenfalls einstellbares Druckventil 133, mit dem das Wärmeträgerfluid auf einen Einspeisedruck (bei dem das Wärmeträgerfluid in den ersten Wärmeträgereinlass 8 abgeleitet wird) gehalten wird.

Der zweite Wärmeträgerfluidstrom kann beispielsweise von einem Heizmittelkreislauf 14 abgezweigt werden, in dem das Wärmeträgerfluid in einem Kreislauf auf der definierten zweiten (hohen) Wärmeträgertemperatur gehalten wird. Der Heizmittelkreislauf 14 umfasst in an sich bekannter Weise eine Wärmequelle 141, eine Kreislaufpumpe 142 und ein gegebenenfalls einstellbares Druckventil 143, mit dem das Wärmeträgerfluid auf einen Einspeisedruck (bei dem das Wärmeträgerfluid in den zweiten Wärmeträgereinlass 9 abgeleitet wird) gehalten wird.

In der in Fig. 1 dargestellten Ausführungsform werden der erste und der zweite Wärmeträgerfluidstrom in der Konditionierleitungsanordnung 3 einer Einstellventilanordnung 6 zugeführt und in geregelter Weise miteinander vermischt. Die Einstellventilanordnung 6 kann in der in Fig. 1 dargestellten Ausführungsform beispielsweise ein geregeltes 3-2-Wegeventil sein, über welches ein gewünschtes Volumenverhältnis der ersten und zweiten Wärmeträgerfluidströme eingestellt werden kann. Alternativ können auch andere Einstellventilanordnungen 6, etwa zwei vor der Zusammenführung der beiden Wärmeträgerfluidströme parallel angeordnete 2-2-Wegeventile, verwendet werden. Die Einstellventilanordnung 6 ist mit einer Regeleinheit (nicht dargestellt) verbunden, welche die Regelung in Abhängigkeit einer Führungstemperatur (insbesondere der an der Einspeisung 4 gemessenen Einleittemperatur Tₐ) und gegebenenfalls unter Berücksichtigung vorausschauender Algorithmen vornimmt. Der gemischte Wärmeträgerfluidstrom wird über den Wärmetauscher 7 geleitet und erwärmt oder kühlt dort das Betriebsfluid. Nach dem Wärmetauscher 7 wird der Wärmeträgerfluidstrom wieder aufgeteilt und über Druckventile 301, 302 und Rückleitungsanschlüsse 17', 17" zur Niederdruckseite des Kühlmittelkreislaufs 13 beziehungsweise des Heizmittelkreislaufs 14 geleitet.

Fig. 2 zeigt eine weitere beispielhafte Ausführungsform einer Vorrichtung zur Konditionierung eines Betriebsfluids in einem Prüfstand 1. Auf eine detaillierte Beschreibung von Elementen, die bereits in Zusammenhang mit Fig. 1 beschrieben wurden und die in Fig. 2 im Wesentlichen unverändert enthalten sind, wird verzichtet, um den Beschreibungstext nicht zu überladen.

Die Konditionierleitungsanordnung 3 der in Fig. 2 dargestellten Vorrichtung weist wiederum einen ersten Wärmeträgereinlass 8, über den Wärmeträgerfluid von der Hochdruckseite eines Kühlmittelkreislaufs 13 bezogen wird, und einen zweiten Wärmeträgereinlass 9, über den Wärmeträgerfluid von der Hochdruckseite eines Heizmittelkreislaufs 14 bezogen wird, auf. Die Konditionierleitungsanordnung 3 leitet den ersten Wärmeträgerfluidstrom von dem ersten Wärmeträgereinlass 8 über einen ersten Wärmetauscher 7' und ein Druckventil 303 zu einem Rückleitungsauslass 17', von wo es zur Niederdruckseite des Kühlmittelkreislaufs 13 gelangt. Den zweiten Wärmeträgerfluidstrom leitet die Konditionierleitungsanordnung 3 von dem zweiten Wärmeträgereinlass 9 über einen zweiten Wärmetauscher 7' und ein Druckventil 304 zu einem Rückleitungsauslass 17", von wo es zur Niederdruckseite des Heizmittelkreislaufs 14 gelangt.

Es ist zu beachten, dass die Konditionierleitungsanordnung 3 in diesem Fall zwei fluidisch getrennte Kreisläufe für das Wärmeträgerfluid aufweist. Gegebenenfalls können daher auch unterschiedliche Wärmeträgerfluida für den ersten Wärmeträgerfluidstrom und den zweiten Wärmeträgerfluidstrom verwendet werden.

In der Betriebsleitungsanordnung 2 teilt sich der von einem Betriebsmittelauslass 11 des Testobjekts 5 stammende Betriebsfluidstrom an einer Verzweigungsstelle 15 in einen ersten Betriebsfluidstrom und einen zweiten Betriebsfluidstrom auf. Der erste Betriebsfluidstrom durchläuft den ersten Wärmetauscher 7' (kühlen) und der zweite Betriebsfluidstrom durchläuft den zweiten Wärmetauscher 7" (heizen). Nach den Wärmetauschern werden die beiden Betriebsfluidströme an einer Vereinigungsstelle 16 wieder zusammengeführt und als ein Betriebsfluidstrom zur Einspeisung 4 des Testobjekts 5 geleitet.

An der Vereinigungsstelle 16 ist eine Einstellventilanordnung 6 vorgesehen, mit der die Volumenverhältnisse zwischen dem ersten (kalten) Betriebsfluidstrom und dem zweiten (warmen) Betriebsfluidstrom geregelt werden. Die entsprechende Regeleinheit ist der Übersichtlichkeit halber wiederum nicht dargestellt. Die Regelung erfolgt wiederum in Abhängigkeit einer Führungstemperatur, insbesondere der an der Einspeisung 4 gemessenen Einleittemperatur Tₐ, und gegebenenfalls unter Berücksichtigung vorausschauender Algorithmen. Alternativ kann die Einstellventilanordnung 6 auch an der Verzweigungsstelle 15 vorgesehen sein, wobei die Funktionsweise im Wesentlichen unverändert ist.

Gegebenenfalls können der erste Wärmeträgerfluidstrom und/oder der zweite Wärmeträgerfluidstrom über Regelventile 305, 306 (die in Fig. 2 in Strichlinien angedeutet sind) geregelt werden, falls dies als zusätzliche Regelmaßnahme vorteilhaft und gewünscht ist. Dadurch kann Energie eingespart werden. Die Wärmetauscher werden nur auf eine definierte Differenztemperatur zur Zieltemperatur geregelt. Ein (gegebenenfalls vorausschauender) Regler kann in Abhängigkeit der Dynamik die Differenztemperatur erhöhen oder verringern.

Anstelle der bislang beschriebenen 3-2-Wegeventile (oder zusätzlich zu diesen) können alternativ auch andere Ventile vorgesehen werden. Beispielsweise kann die Aufteilung einer Fluidströmung in zwei oder mehr parallele Leitungen mithilfe mehrerer Regelventile (z.B. 2-2-Wegeventilen) erfolgen, die nach einer Verzweigungsstelle in den einzelnen parallelen Leitungen angeordnet sind. Analog dazu kann auch die Mischung von Fluidströmungen aus mehreren parallelen Leitungen an einer Vereinigungsstelle durch mehrere Regelventile erfolgen, die vor der Vereinigungsstelle in den einzelnen parallelen Leitungen angeordnet sind.

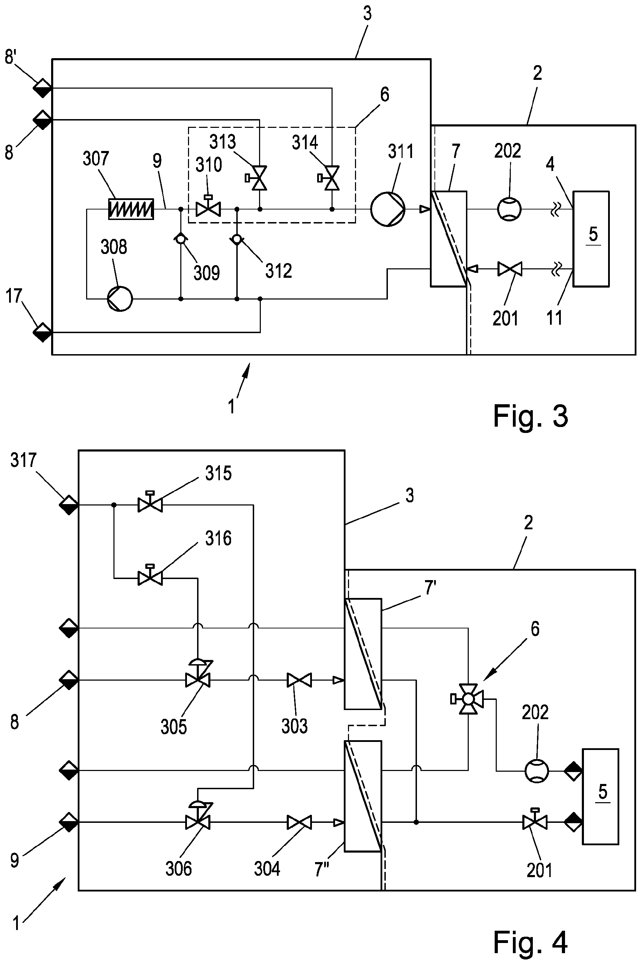

Fig. 3 zeigt eine schematische Darstellung einer weiteren Ausführungsform einer Vorrichtung zur Konditionierung eines Betriebsfluids in einem Prüfstand 1. Der Betriebsfluidstrom wird in einem einfachen Kreislauf von einem Betriebsmittelauslass 11 des Testobjekts 5 kommend über ein Druckventil 201, den Wärmetauscher 7 und ein Durchflussmessgerät 202 zu der Einspeisung 4 des Testobjekts 5 geleitet.

Auf Seiten der Konditionierleitungsanordnung 3 sind in einem Vorkreis eine Heizeinrichtung 307, eine Vorkreispumpe 308 und eine Rückschlagventil 309 angeordnet. Im Vorkreis wird das Wärmeträgerfluid auf eine zweite Wärmeträgertemperatur erwärmt, bei einem zweiten Wärmeträgereinlass 9 aus dem Vorkreis abgeleitet und über ein Regelventil 310 als zweites Wärmeträgerfluid einem Hauptkreis zugeführt. Die Heizeinrichtung 307 kann beispielsweise eine elektrische Heizeinheit sein, deren Leistung ausreichend hoch ist, um das Wärmträgerfluid im Vorkreis schnell und stark genug aufzuheizen. Die Heizleistung kann dabei jeweils an den aktuellen Bedarf angepasst werden. Anstelle eines elektrischen Heizelements kann beispielsweise auch ein Wärmetauscher verwendet werden.

Der Hauptkreis umfasst eine Hauptkreispumpe 311, den Wärmetauscher 7 und ein Rückschlagventil 312. Zwischen dem Ausgang des Wärmetauschers 7 und dem Rückschlagventil 312 zweigt eine Rückleitung ab, die Rückleitungsauslass 17 und zu einem externen Kreislauf für das Wärmeträgerfluid, insbesondere einem Kühlmittelkreislauf 13 führt. Der Kühlmittelkreislauf 13 ist in Fig. 3 der Übersichtlichkeit halber nicht dargestellt, er kann beispielsweise analog zu den in Fig. 1 und 2 dargestellten Kühlmittelkreisläufen ausgebildet sein.

Über einen ersten Wärmeträgereinlass 8 gelangt wiederum ein erster (kalter) Wärmeträgerfluidstrom in die Konditionierleitungsanordnung 3 und wird über ein weiteres Regelventil 313 in den Hauptkreis eingespeist. Weiters umfasst die Vorrichtung einen dritten Wärmeträgereinlass 8', über den ein dritter Wärmeträgerfluidstrom der Konditionierleitungsanordnung 3 zugeführt wird. Der dritte Wärmeträgerfluidstrom wird über ein drittes Regelventil 314 in den Hauptkreis eingespeist. Der dritte Wärmeträgerfluidstrom weist eine dritte Wärmeträgertemperatur auf, die zwischen der ersten und der zweiten Wärmeträgertemperatur liegt. Die dritte Wärmeträgertemperatur ist vorzugsweise so ausgelegt, dass in einem "Normalbetrieb" (etwa wenn das Testobjekt 5 in einem stabilen Zustand betrieben wird und nur geringfügige Regeleingriffe erforderlich sind) eine Regelung des dritten Regelventils 314 und des Regelventils 310 vom Vorkreis (bei geschlossenem Regelventil 313) ausreicht, um das in der Betriebsleitungsanordnung 2 zirkulierende Betriebsfluid in einem gewünschten Betriebstemperaturbereich zu halten. Erst wenn schnelle Temperaturänderungen bzw. Regeleingriffe erforderlich sind, wird auch das anderen Regelventil 313 aktiviert. Gegebenenfalls kann auch eine Temperatureinstellung bei geschlossenem Regelventil 310 (vom Vorkreis) durch Regelung der beiden Regelventile 313 und 314 des ersten und dritten Wärmeträgereinlässe 8, 8" durchgeführt werden, wenn der aktuelle Betriebstemperaturbereich zwischen den Wärmeträgertemperaturen dieser beiden Wärmeträgerfluida liegt.

Die Einheit der drei Regelventile 310, 313 und 314 bildet somit eine Einstellventilanordnung 6 aus, über die die Temperatur des Wärmeträgerfluids, das dem Wärmetauscher 7 zugeleitet wird, in einem breiten Betriebsbereich geregelt verändert werden kann. Da die Wärmeträgerfluidströme gemeinsame Kreisläufe und eine gemeinsame Rückleitung nutzen, müssen identische Wärmeträgerfluida verwendet werden.

Fig. 4 zeigt eine weitere Ausführungsform einer Konditioniereinheit für einen Prüfstand 1 mit zwei Wärmetauschern 7' und 7". Die Betriebsleitungsanordnung 2 entspricht im Wesentlichen der in Fig. 2 dargestellten Anordnung, wobei zusätzlich ein regelbares Druckventil 201 und ein Durchflussmessgerät 202 vorgesehen sind. Das Druckventil 201 kann für die Nachstellung der realen Druckverluste des Prüflings verwendet werden.

Auf Seiten der Konditionierleitungsanordnung sind wiederum ein erster und ein zweiter Wärmeträgereinlass 8, 9 vorgesehen, wobei der erste und der zweite Wärmeträgerfluidstrom wiederum über eigene, voneinander getrennte Rückleitungen geführt sind, sodass getrennte Kreisläufe für die beiden Wärmeträgerfluidströme und gegebenenfalls unterschiedliche Wärmeträgerfluida verwendet werden können. Die beiden Druckventile 303, 304 sind vorgesehen, um den Druckabfall des Systems und damit die Durchflussraten der Wärmeträgerfluidströme durch die Wärmetauscher 7', 7" einzustellen. Dies kann erforderlich sein, wenn mehrere Konditioniervorrichtungen an einen zentralen Kühlmittelkreislauf 13 bzw. Heizmittelkreislauf 14 angeschlossen sind.

Weiters sind für den ersten und den zweiten Wärmeträgerfluidstrom jeweils ein Regelventil 305, 306 vorgesehen, über welche die Durchflussraten der Wärmeträgerfluidströme geregelt werden. Die beiden Regelventile sind druckluftbetätigt, um eine hochdynamische Ventilbewegung zu erlauben. Zur Druckluftbetätigung sind jeweils ein Druckluftventil 315, 316 vorgesehen, die an einen Drucklufteinlass 317 angeschlossen sind. Auf diese Weise kann die thermische Energie mit hoher Energieeffizienz geregelt werden.

Die Temperaturregelung kann sowohl über die beiden druckgeregelten Regelventile 305, 306 auf Seiten der Konditionierleitungsanordnung 3, als auch über die Einstellventilanordnung 6 auf Seiten der Betriebsleitungsanordnung 2 erfolgen.

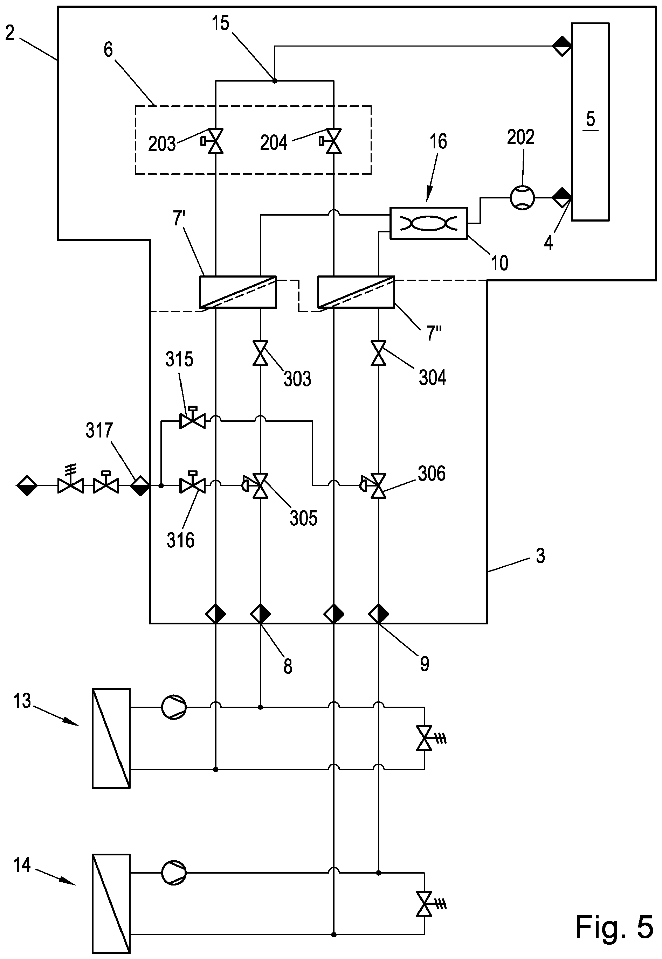

Fig. 5 zeigt eine weitere Ausführungsform der Konditioniervorrichtung in einem Prüfstand 1. Die Konditionierleitungsanordnung 3 entspricht im Wesentlichen der in Fig. 4 dargestellten und zuvor beschriebenen Ausführung, wobei in Fig. 5 der Kühlmittelkreislauf 13 und der Heizmittelkreislauf 14, sowie eine Druckluftzuleitung zu dem Drucklufteinlass 317 dargestellt sind. Der Kühlmittelkreislauf 13 und der Heizmittelkreislauf 14, sowie die damit verbundenen Bereiche der Konditionierleitungsanordnung 3 sind jeweils voneinander getrennt ausgebildet, sodass es möglich ist, unterschiedliche Wärmeträgerfluida zu verwenden.

Auf Seiten der Betriebsleitungsanordnung 3 ist wiederum eine Einstellventilanordnung 6 vorgesehen, welche in dem Fall durch zwei parallel angeordnete Regelventile 203, 204 gebildet ist, die jeweils nach der Verzeigungsstelle 15 den Durchfluss des Betriebsfluids über den entsprechenden Wärmetauscher 7', 7" regeln. Nach den Wärmetauschern werden die beiden Betriebsfluidströme an einer Vereinigungsstelle 16 zusammengeführt, wobei an der Vereinigungsstelle 16 ein Turbolator 10 vorgesehen ist, der das warme und kalte Betriebsfluid vermischt, um eine einheitliche Temperatur an der Einspeisung 4 zu gewährleisten. Diese Anordnung erlaubt eine schnelle und präzise Regelung, wobei über das Durchflussmessgerät 202 eine Durchflussmessung und Regelung erfolgen kann. Alternativ kann der Durchfluss auch anhand von Differenzdrücken ermittelt werden, die über entsprechende Drucksensoren (nicht dargestellt) ermittelt werden können.

Durch die in Fig. 5 dargestellte Ausführung ist eine Vereinfachung der Betriebsleitungsanordnung möglich, indem man die Regelventile 203 und 204 für die zusätzliche Regelung des Druckverlustes über die Anlage nutzt und dadurch kein eigenes Ventil dafür vorsehen muss. Im Gegensatz zu einem 3-2 Wege-Regelventil kann mit der in Fig. 5 dargestellten Anordnung mit den beiden 2-2-Wegeventilen eine Linearisierung der Ventilkennlinie erreicht werden. Dadurch kann die Regelgenauigkeit gesteigert werden.

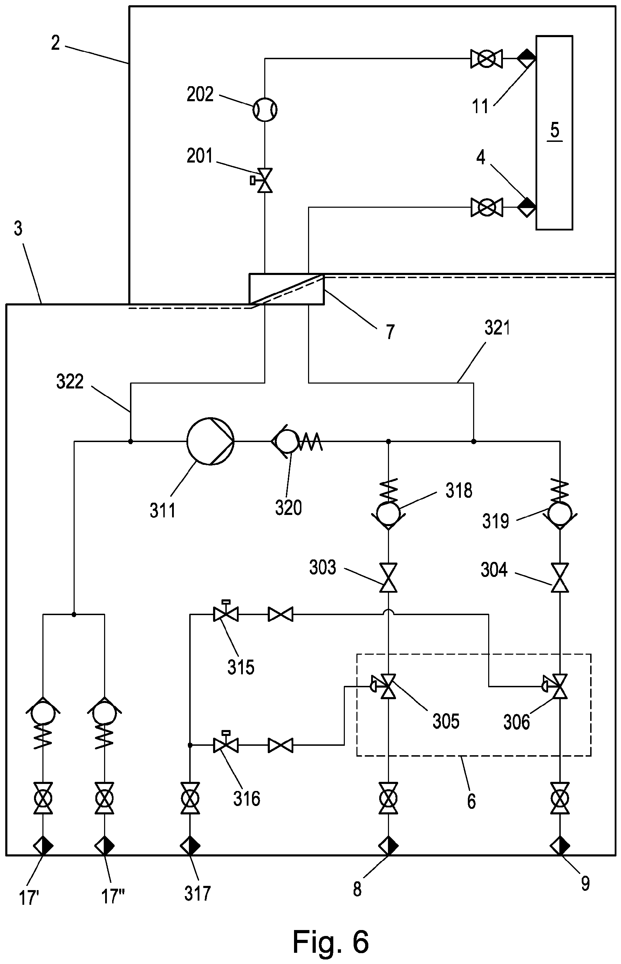

Fig. 6 zeigt eine weitere Ausführungsform einer Vorrichtung zur Konditionierung eines Betriebsfluids, die wiederum auf einem einzigen Wärmetauscher 7 beruht. Die Betriebsleitungsanordnung 2 ist in dem Fall verhältnismäßig einfach ausgeführt, wobei ein Betriebsfluidstrom von einem Betriebsmittelauslass 11 des Testobjekts 5 über ein Durchflussmessgerät 202 und ein regelbares Druckventil 201 über den Wärmetauscher 7 zu einer Einspeisung 4 des Testobjekts 5 geführt wird. Durch diese relativ einfach gehaltene Betriebsleitungsanordnung 2 lassen sich für das Testobjekt 5 geringe Druckverluste und realitätsnahe Volumina realisieren.

Die Temperaturregelung erfolgt auf Seiten der Konditionierleitungsanordnung 3. Dazu ist wiederum ein erster und ein zweiter Wärmeträgereinlass 8, 9 vorgesehen. Die beiden Druckventile 303, 304 sind vorgesehen, um den Druckabfall des Systems und damit die Durchflussraten der Wärmeträgerfluidströme durch den Wärmetauscher 7 einzustellen. Weiters sind für den ersten und den zweiten Wärmeträgerfluidstrom jeweils ein Regelventil 305, 306 vorgesehen, über welche die Durchflussraten der Wärmeträgerfluidströme und deren Verhältnis zueinander geregelt werden. Die beiden Regelventile sind druckluftbetätigt, um eine hochdynamische Ventilbewegung zu erlauben. Zur Druckluftbetätigung sind jeweils ein Druckluftventil 315, 316 vorgesehen, die an einen Drucklufteinlass 317 angeschlossen sind. Die Rückschlagventile 318, 319 dienen dazu, einen definierten Nullpunkt, unabhängig vom Systemrücklaufdruck bei den Rückleitungsauslässen 17', 17" einzustellen. Für die Regelung des Durchflusses wird eine Differenzdruckmessung (nicht dargestellt) über das Druckventil 303 und das Rückschlagventil 318 (bzw. das Druckventil 304 und das Rückschlagventil 319) verwendet, die in die Regelung mit einfließt. Alternativ oder zusätzlich kann auch je ein Durchflusssensor verbaut oder eine regelungstechnische Vorsteuerung verwendet werden.

Im Unterschied zur den Ausführungsformen der Fig. 2, 4 und 5 werden die beiden Wärmeträgerfluidströme nach den Rückschlagventilen 318, 319 zusammengeführt und in einem Hauptkreis zirkulieren gelassen. Der vereinigte Wärmeträgerfluidstrom verläuft dabei im Hauptkreis über einen Vorlauf 321 zum Wärmetauscher 7 und über einen Rücklauf 322 zu einer Hauptkreispumpe 311. Die Hauptkreispumpe 311 stellt sicher, dass eine Strömung von Wärmeträgerfluid durch den Wärmetauscher 7 auch dann aufrecht bleibt, wenn die beiden Regelventile 305, 306 geschlossen sind. Der Hauptkreispumpe 311 nachgelagert ist ein weiteres Rückschlagventil 320 angeordnet. Der erste und der zweite Wärmeträgerfluidstrom münden zwischen dem Rückschlagventil 320 und dem Wärmetauscher 7 in den Vorlauf 321. Vom Rücklauf 322 zweigt eine Rückleitung ab, die sich auf zwei Rückleitungsauslässe 17', 17" aufteilt, welche das Wärmeträgerfluid wieder an den Kühlmittelkreislauf 13 und den Heizmittelkreislauf 14 (in Fig. 6 nicht dargestellt) zurückführen. In den Rückleitungen sind ebenfalls Rückschlagventile 323, 324 vorgesehen.

Diese verhindern eine Falschströmung, insbesondere wenn mehrere Systeme an einer gemeinsame Versorgung (Kühlmittelkreislauf 13 und/oder Heizmittelkreislauf 14) angeschlossen sind.

Da die Fluida der ersten und zweiten Wärmeträgerfluidströme miteinander vermischt werden, müssen diese vom selben Typ sein.

Für eine zuverlässige Regelung können in allen oben beschriebenen Ausführungsformen an der Konditionierleitungsanordnung 3 und/oder der Betriebsleitungsanordnung 2 zahlreiche Sensoren vorgesehen sein, insbesondere Differenzdrucksensoren, Durchflusssensoren, Drucksensoren und Temperatursensoren. Aus Gründen der Übersichtlichkeit wurde auf eine Darstellung solcher Sensoren in den Figuren großteils verzichtet. Der Fachmann ist jedoch bei Kenntnis der hierin offenbarten Lehren von sich aus in der Lage, die erforderlichen Sensoren zu implementieren um die gestellten Regelaufgaben zu optimieren.

In der Beschreibung und den Ansprüchen bedeuten relativierende Ausdrücke wie "im Wesentlichen" oder "etwa", sofern nichts anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen. Die Angabe "11 %" bedeutet somit beispielsweise: "von 9,9 % bis 12,1 %". Bei Bezeichnungen wie etwa: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Die in den einzelnen Ausgestaltungen und Beispielen angegebenen einzelnen Merkmale und Varianten können (sofern nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

## Patentansprüche

1. Vorrichtung zur Konditionierung eines Betriebsfluids an einem Prüfstand (1), wobei die Vorrichtung eine Betriebsleitungsanordnung (2) für das Betriebsfluid aufweist, welche in einer Einspeisung (4) zu einem Testobjekt (5) einmündet, wobei das in die Einspeisung (4) eingespeiste Betriebsfluid auf eine Einleittemperatur (Tₐ) innerhalb eines Betriebstemperaturbereichs regelbar ist, wobei die Vorrichtung eine Konditionierleitungsanordnung (3) aufweist, über welche zumindest ein Wärmeträgerfluid zu zumindest einem Wärmetauscher (7) geleitet wird, und wobei der zumindest eine Wärmetauscher (7) für einen Wärmeaustausch zwischen der Konditionierleitungsanordnung (3) und der Betriebsleitungsanordnung (2) angeordnet ist, wobei die Konditionierleitungsanordnung (3) zumindest einen ersten Wärmeträgereinlass (8) zur Zuleitung eines ersten Wärmeträgerfluidstroms mit einer ersten Wärmeträgertemperatur (Tₗ) aufweist, **dadurch gekennzeichnet, dass** die Konditionierleitungsanordnung (3) zumindest einen zweiten Wärmeträgereinlass (9) zur Zuleitung eines zweiten Wärmeträgerfluidstroms mit einer zweiten Wärmeträgertemperatur (Tₕ) aufweist, wobei die erste Wärmeträgertemperatur (Tₗ) auf einen Wert unterhalb des Betriebstemperaturbereichs einstellbar ist, wobei die zweite Wärmeträgertemperatur (Tₕ) auf einen Wert oberhalb des Betriebstemperaturbereichs einstellbar ist und wobei die Vorrichtung eine Einstellventilanordnung (6) aufweist, mit welcher durch geregeltes Mischen von zumindest zwei Fluida unterschiedlicher Temperatur die Einleittemperatur (Tₐ) des Betriebsfluids innerhalb des Betriebstemperaturbereichs dynamisch regelbar ist.

2. Vorrichtung nach Anspruch 1, **dadurch gekennzeichnet, dass** die Einstellventilanordnung (6) druckluftbetätigte Ventile und/oder andere hochdynamisch betätigbare Ventile aufweist.

3. Vorrichtung nach Anspruch 1 oder 2, **dadurch gekennzeichnet, dass** die Konditionierleitungsanordnung (3) eine Verbindung zwischen Leitungsbereichen für den ersten Wärmeträgerfluidstrom und den zweiten Wärmeträgerfluidstrom aufweist.

4. Vorrichtung nach Anspruch 3, **dadurch gekennzeichnet, dass** die Einstellventilanordnung (6) in der Konditionierleitungsanordnung (3) angeordnet ist.

5. Vorrichtung nach Anspruch 1 oder 2, **dadurch gekennzeichnet, dass** die Konditionierleitungsanordnung (3) voneinander getrennten Leitungsbereiche für den ersten Wärmeträgerfluidstrom und den zweiten Wärmeträgerfluidstrom aufweist.

6. Vorrichtung nach einem der vorhergehenden Ansprüche, **dadurch gekennzeichnet, dass** der erste Wärmeträgerfluidstrom zu einem ersten Wärmetauscher (7') geführt ist und dass der zweite Wärmeträgerfluidstrom zu einem zweiten Wärmetauscher (7") geführt ist, wobei die Einstellventilanordnung (6) in der Betriebsleitungsanordnung (2) angeordnet ist.

7. Vorrichtung nach Anspruch 6, **dadurch gekennzeichnet, dass** die Einstellventilanordnung (6) zur Mischung eines von dem ersten Wärmetauscher (7') konditionierten ersten Betriebsfluidstroms mit einem von dem zweiten Wärmetauscher (7") konditionierten zweiten Betriebsfluidstroms angeordnet ist.

8. Vorrichtung nach Anspruch 6, **dadurch gekennzeichnet, dass** die Einstellventilanordnung (6) zur Aufteilung eines vorzugsweise von dem Testobjekt (5) rückgeführten Betriebsfluidstroms in einen ersten Betriebsfluidstrom zu dem ersten Wärmetauscher (7') und einen zweiten Betriebsfluidstrom zu dem zweiten Wärmetauscher (7") angeordnet ist.

9. Vorrichtung nach einem der Ansprüche 7 oder 8, **dadurch gekennzeichnet, dass** an oder nach einer Zusammenführung des ersten Betriebsfluidstroms und des zweiten Betriebsfluidstroms ein Turbolator (10) angeordnet ist.

10. Vorrichtung nach einem der Ansprüche 1 bis 9, **dadurch gekennzeichnet, dass** die Vorrichtung für einen positiven und/oder negativen maximalen Temperaturgradienten der Einleittemperatur (Tₐ) von über 4 K/s, vorzugsweise über 6 K/s und insbesondere über 8 K/s ausgelegt ist.

11. Verfahren zur Konditionierung eines Betriebsfluids an einem Prüfstand (1), wobei das Betriebsfluid mit einer innerhalb eines Betriebstemperaturbereichs geregelten Einleittemperatur (Tₐ) einem Testobjekt (5) zugeführt wird und wobei das Betriebsfluid vor dem Zuführen über zumindest einen Wärmetauscher geleitet wird, in dem ein Wärmeaustauch mit einem Wärmeträgerfluid erfolgt, wobei zur Konditionierung zumindest ein erster Wärmeträgerfluidstrom mit einer ersten Wärmeträgertemperatur (Tₗ) verwendet wird, **dadurch gekennzeichnet, dass** zumindest ein zweiter Wärmeträgerfluidstrom mit einer zweiten Wärmeträgertemperatur (Tₕ) verwendet wird, wobei die erste Wärmeträgertemperatur (Tₗ) auf einen Wert unterhalb des Betriebstemperaturbereichs eingestellt wird, wobei die zweite Wärmeträgertemperatur (Tₕ) auf einen Wert oberhalb des Betriebstemperaturbereichs eingestellt wird und wobei die Einleittemperatur (Tₐ) des Betriebsfluids durch geregeltes Mischen von zumindest zwei Fluida unterschiedlicher Temperatur innerhalb des Betriebstemperaturbereichs dynamisch geregelt wird.

12. Verfahren nach Anspruch 11, **dadurch gekennzeichnet, dass** der erste Wärmeträgerfluidstrom und der zweite Wärmeträgerfluidstrom zur Einstellung der Einleittemperatur (Tₐ) in einem geregelten Verhältnis miteinander gemischt werden und der gemischte Wärmeträgerfluidstrom einem Wärmetauscher (7) für einen Wärmeaustausch mit einem Betriebsfluidstrom zugeleitet wird.

13. Verfahren nach Anspruch 11, **dadurch gekennzeichnet, dass** der erste Wärmeträgerfluidstrom einem ersten Wärmetauscher (7') für einen Wärmeaustausch mit einem ersten Betriebsfluidstrom zugeleitet wird und dass der zweite Wärmeträgerfluidstrom einem zweiten Wärmetauscher (7") für einen Wärmeaustausch mit einem zweiten Betriebsfluidstrom zugeleitet wird, wobei der erste Betriebsfluidstrom und der zweite Betriebsfluidstrom zur Einstellung der Einleittemperatur (Tₐ) in einem geregelten Verhältnis miteinander gemischt werden.

14. Verfahren nach einem der Ansprüche 11 bis 13, **dadurch gekennzeichnet, dass** zur Regelung der Einleittemperatur eine vorausschauende Regelung verwendet wird.

15. Verfahren nach einem der Ansprüche 11 bis 14, **dadurch gekennzeichnet, dass** das Betriebsfluid innerhalb eines Betriebstemperaturbereichs geregelt wird, der eine Minimaltemperatur im Bereich von etwa -40 C° bis etwa 0 °C und eine Maximaltemperatur im Bereich von etwa 80 C° bis 140 C° aufweist, wobei der Betriebstemperaturbereich vorzugsweise zwischen etwa -25 C° und etwa +125 C°liegt.

16. Verfahren nach einem der Ansprüche 11 bis 15, **dadurch gekennzeichnet, dass** die erst Wärmeträgertemperatur (Tₗ) zwischen -50 °C und -10 °C liegt und insbesondere etwa -30 °C beträgt, und/oder dass die zweite Wärmeträgertemperatur (Tₕ) zwischen 100 °C und 180°C liegt und insbesondere etwa 150 °C beträgt.

## Claims

1. Device for conditioning an operating fluid on a test bench (1), the device comprising an operating line arrangement (2) for the operating fluid that opens into a test object (5) in a feed (4), the operating fluid fed into the feed (4) being controllable to an inlet temperature (Tₐ) within an operating temperature range, the device comprising a conditioning line arrangement (3) via which at least one heat transfer fluid is directed to at least one heat exchanger (7), and the at least one heat exchanger (7) being arranged for heat exchange between the conditioning line arrangement (3) and the operating line arrangement (2), the conditioning line arrangement (3) comprising at least one first heat transfer medium inlet (8) for supplying a first heat transfer fluid stream having a first heat transfer medium temperature (Tₗ), **characterized in that** the conditioning line arrangement (3) comprises at least one second heat transfer medium inlet (9) for supplying a second heat transfer fluid stream having a second heat transfer medium temperature (Tₕ), the first heat transfer medium temperature (Tₗ) being adjustable to a value below the operating temperature range and the second heat transfer medium temperature (Tₕ) being adjustable to a value above the operating temperature range, and the device comprising an adjustment valve arrangement (6) by means of which the inlet temperature (Tₐ) of the operating fluid can be dynamically controlled within the operating temperature range by controlled mixing of at least two fluids having different temperatures.

2. Device according to claim 1, **characterized in that** the adjustment valve arrangement (6) comprises valves which are actuated by compressed air and/or other valves which can be actuated in a highly dynamic manner.

3. Device according to either claim 1 or claim 2, **characterized in that** the conditioning line arrangement (3) comprises a connection between line regions for the first heat transfer fluid stream and the second heat transfer fluid stream.

4. Device according to claim 3, **characterized in that** the adjustment valve arrangement (6) is arranged in the conditioning line arrangement (3).

5. Device according to either claim 1 or claim 2, **characterized in that** the conditioning line arrangement (3) comprises separate line regions for the first heat transfer fluid stream and the second heat transfer fluid stream.

6. Device according to any of the preceding claims, **characterized in that** the first heat transfer fluid stream is guided to a first heat exchanger (7') and **in that** the second heat transfer fluid stream is guided to a second heat exchanger (7"), the adjustment valve arrangement (6) being arranged in the operating line arrangement (2).

7. Device according to claim 6, **characterized in that** the adjustment valve arrangement (6) is arranged for mixing a first operating fluid stream conditioned by the first heat exchanger (7') with a second operating fluid stream conditioned by the second heat exchanger (7").

8. Device according to claim 6, **characterized in that** the adjustment valve arrangement (6) is arranged for dividing an operating fluid stream, which is preferably fed back from the test object (5), into a first operating fluid stream to the first heat exchanger (7') and a second operating fluid stream to the second heat exchanger (7").

9. Device according to either claim 7 or claim 8, **characterized in that** a turbulator (10) is arranged at or downstream of a merging of the first operating fluid stream and the second operating fluid stream.

10. Device according to any of claims 1 to 9, **characterized in that** the device is designed for a positive and/or negative maximum temperature gradient of the inlet temperature (Tₐ) of more than 4 K/s, preferably more than 6 K/s and in particular more than 8 K/s.

11. Method for conditioning an operating fluid on a test bench (1), the operating fluid being supplied to a test object (5) at an inlet temperature (Tₐ) which is controlled within an operating temperature range and the operating fluid being guided through at least one heat exchanger before being supplied, in which heat exchanger a heat exchange takes place with a heat transfer fluid, with at least one first heat transfer fluid stream having a first heat transfer medium temperature (Tₗ) being used for conditioning, **characterized in that** at least one second heat transfer fluid stream having a second heat transfer medium temperature (Tₕ) is used, the first heat transfer medium temperature (Tₗ) being adjusted to a value below the operating temperature range, the second heat transfer medium temperature (Tₕ) being adjusted to a value above the operating temperature range and the inlet temperature (Tₐ) of the operating fluid being dynamically controlled within the operating temperature range by controlled mixing of at least two fluids having different temperatures.

12. Method according to claim 11, **characterized in that** the first heat transfer fluid stream and the second heat transfer fluid stream are mixed with one another in a controlled ratio in order to adjust the inlet temperature (Tₐ), and the mixed heat transfer fluid stream is supplied to a heat exchanger (7) for heat exchange with an operating fluid stream.

13. Method according to claim 11, **characterized in that** the first heat transfer fluid stream is supplied to a first heat exchanger (7') for heat exchange with a first operating fluid stream and **in that** the second heat transfer fluid stream is supplied to a second heat exchanger (7") for heat exchange with a second operating fluid stream, the first operating fluid stream and the second operating fluid stream being mixed with one another in a controlled ratio in order to adjust the inlet temperature (Tₐ).

14. Method according to any of claims 11 to 13, **characterized in that** predictive control is used to control the inlet temperature.

15. Method according to any of claims 11 to 14, **characterized in that** the operating fluid is controlled within an operating temperature range which has a minimum temperature in the range from approx. -40°C to approx. 0°C and a maximum temperature in the range from approx. 80°C to 140°C, the operating temperature range preferably being between approx. -25°C and approx. +125°C.

16. Method according to any of claims 11 to 15, **characterized in that** the first heat transfer medium temperature (Tₗ) is between -50°C and -10°C and is in particular approximately -30°C, and/or **in that** the second heat transfer medium temperature (Tₕ) is between 100°C and 180°C and in particular is approx. 150°C.

## Revendications

1. Dispositif de conditionnement d'un fluide de fonctionnement sur un banc d'essai (1), le dispositif présentant un agencement de conduite de fonctionnement (2) destiné au fluide de fonctionnement et qui débouche dans une alimentation (4) vers un objet à tester (5), le fluide de fonctionnement alimenté dans l'alimentation (4) étant réglable à une température d'introduction (Tₐ) dans une plage de température de fonctionnement, le dispositif présentant un agencement de conduite de conditionnement (3) par lequel au moins un fluide caloporteur est conduit vers au moins un échangeur de chaleur (7), et l'au moins un échangeur de chaleur (7) étant agencé pour un échange de chaleur entre l'agencement de conduite de conditionnement (3) et l'agencement de conduite de fonctionnement (2), l'agencement de conduite de conditionnement (3) présentant au moins une première entrée caloporteuse (8) permettant de conduire un premier flux de fluide caloporteur d'une première température caloporteuse (Tₗ), **caractérisé en ce que** l'agencement de conduite de conditionnement (3) présente au moins une seconde entrée caloporteuse (9) permettant de conduire un second flux de fluide caloporteur d'une seconde température caloporteuse (Tₕ), la première température caloporteuse (Tₗ) étant réglable à une valeur inférieure à la plage de température de fonctionnement, la seconde température caloporteuse (Tₕ) étant réglable à une valeur supérieure à la plage de température de fonctionnement et le dispositif présentant un agencement de soupape de réglage (6) au moyen duquel la température d'introduction (Tₐ) du fluide de fonctionnement est réglable dynamiquement dans la plage de température de fonctionnement par mélange contrôlé d'au moins deux fluides de températures différentes.

2. Dispositif selon la revendication 1, **caractérisé en ce que** l'agencement de soupape de réglage (6) présente des soupapes actionnées par air comprimé et/ou d'autres soupapes pouvant être actionnées de manière hautement dynamique.

3. Dispositif selon la revendication 1 ou 2, **caractérisé en ce que** l'agencement de conduite de conditionnement (3) présente une liaison entre des zones de conduite destinées au premier flux de fluide caloporteur et au second flux de fluide caloporteur.

4. Dispositif selon la revendication 3, **caractérisé en ce que** l'agencement de soupape de réglage (6) est agencé dans l'agencement de conduite de conditionnement (3).

5. Dispositif selon la revendication 1 ou 2, **caractérisé en ce que** l'agencement de conduite de conditionnement (3) présente des zones de conduite séparées les unes des autres et destinées au premier flux de fluide caloporteur et au second flux de fluide caloporteur.

6. Dispositif selon l'une des revendications précédentes, **caractérisé en ce que** le premier flux de fluide caloporteur est acheminé vers un premier échangeur de chaleur (7') et que le second flux de fluide caloporteur est acheminé vers un second échangeur de chaleur (7"), l'agencement de soupape de réglage (6) étant agencé dans l'agencement de conduite de fonctionnement (2).

7. Dispositif selon la revendication 6, **caractérisé en ce que** l'agencement de soupape de réglage (6) est agencé pour le mélange d'un premier flux de fluide de fonctionnement conditionné par le premier échangeur de chaleur (7') avec un second flux de fluide de fonctionnement conditionné par le second échangeur de chaleur (7").

8. Dispositif selon la revendication 6, **caractérisé en ce que** l'agencement de soupape de réglage (6) est agencé en un premier flux de fluide de fonctionnement vers le premier échangeur de chaleur (7') et en un second flux de fluide de fonctionnement vers le second échangeur de chaleur (7") afin de diviser un flux de fluide de fonctionnement, lequel est de préférence renvoyé de l'objet à tester (5).

9. Dispositif selon l'une des revendications 7 ou 8, **caractérisé en ce qu'**un turbulateur (10) est agencé au niveau d'une ou après une fusion du premier flux de fluide de fonctionnement et du second flux de fluide de fonctionnement.

10. Dispositif selon l'une des revendications 1 à 9, **caractérisé en ce que** le dispositif est conçu pour un gradient de température maximal positif et/ou négatif de la température d'introduction (Tₐ) supérieur à 4 K/s, de préférence supérieur à 6 K/s et en particulier supérieur à 8 K/s.

11. Procédé de conditionnement d'un fluide de fonctionnement sur un banc d'essai (1), le fluide de fonctionnement étant acheminé à un objet à tester (5) à une température d'introduction (Tₐ) réglée dans une plage de température de fonctionnement, et le fluide de fonctionnement étant conduit, avant l'acheminement, à travers au moins un échangeur de chaleur, dans lequel un échange de chaleur a lieu avec un fluide caloporteur, au moins un premier flux de fluide caloporteur d'une première température caloporteuse (Tₗ) étant utilisé pour le conditionnement, **caractérisé en ce qu'au** moins un second flux de fluide caloporteur d'une seconde température caloporteuse (Tₕ) est utilisé, la première température caloporteuse (Tₗ) étant réglée à une valeur inférieure à la plage de température de fonctionnement, la seconde température caloporteuse (Tₕ) étant réglée à une valeur supérieure à la plage de température de fonctionnement et la température d'introduction (Tₐ) du fluide de fonctionnement étant réglée dynamiquement dans la plage de température de fonctionnement par mélange contrôlé d'au moins deux fluides de températures différentes.

12. Procédé selon la revendication 11, **caractérisé en ce que** le premier flux de fluide caloporteur et le second flux de fluide caloporteur sont mélangés l'un avec l'autre dans un rapport contrôlé pour régler la température d'introduction (Tₐ) et le flux de fluide caloporteur mélangé est conduit à un échangeur de chaleur (7) pour un échange de chaleur avec un flux de fluide de fonctionnement.

13. Procédé selon la revendication 11, **caractérisé en ce que** le premier flux de fluide caloporteur est conduit à un premier échangeur de chaleur (7') pour un échange de chaleur avec un premier flux de fluide de fonctionnement et que le second flux de fluide caloporteur est conduit à un second échangeur de chaleur (7") pour un échange de chaleur avec un second flux de fluide de fonctionnement, le premier flux de fluide de fonctionnement et le second flux de fluide de fonctionnement étant mélangés l'un avec l'autre dans un rapport contrôlé pour régler la température d'introduction (Tₐ).

14. Procédé selon l'une des revendications 11 à 13, **caractérisé en ce qu'**un réglage anticipateur est utilisé pour contrôler la température d'introduction.

15. Procédé selon l'une des revendications 11 à 14, **caractérisé en ce que** le fluide de fonctionnement est réglé dans une plage de température de fonctionnement qui présente une température minimale dans la plage d'environ -40 °C à environ 0 °C et une température maximale dans la plage d'environ 80 °C à 140 °C, la plage de température de fonctionnement étant de préférence comprise entre environ -25 °C et environ +125 °C.

16. Procédé selon l'une des revendications 11 à 15, **caractérisé en ce que** la première température caloporteuse (Tₗ) est comprise entre -50 °C et -10 °C et est en particulier d'environ -30 °C, et/ou que la seconde température caloporteuse (Tₕ) est comprise entre 100 °C et 180 °C et est en particulier d'environ 150 °C.
